Europäisches Patentamt

European Patent Office

Office européen des brevets

(19)

(11) Publication number : **0 508 719 A1**

# (12) EUROPEAN PATENT APPLICATION

(21) Application number : **92303063.9**

(22) Date of filing : **07.04.92**

(51) Int. Cl.⁵ : **C09K 3/10, E21D 11/38**

(30) Priority : **10.04.91 GB 9107599**

(43) Date of publication of application :
**14.10.92 Bulletin 92/42**

(84) Designated Contracting States :
**BE DE DK ES FR GB IT NL**

(71) Applicant : **OXFORD POLYTECHNIC**
**External Relations Centre**
**Headington, Oxford OX3 OBP (GB)**

(72) Inventor : **Washbourne, Jim**
**8 Isis Close**
**Long Hanborough, Oxon OX7 2JN (GB)**

(74) Representative : **Arthur, Bryan Edward**
**Withers & Rogers 4 Dyer's Buildings Holborn**
**London EC1N 2JT (GB)**

(54) **Sealing composition.**

(57)    A sealing composition comprises by mass
(3-7)% laponite, (5-10)% mica and/or gel in the
form of flakes or micelle and balance water.

EP 0 508 719 A1

Jouve, 18, rue Saint-Denis, 75001 PARIS

This invention relates to a sealing composition and, more particularly, a sealing composition for use in conjunction with a tail seal of a tunnelling machine such as that described and claimed in copending Patent Application No. 91.02357.2.

An effective tail seal for use with tunnelling machines is necessary in order to prevent leakage of water, slurry or a water-based grout from around a shield disposed between the machine and that part of a tunnel already formed by the machine. A number of so-called brush and plate seals have been proposed and in an attempt to improve sealing between individual brush elements or plates a thixotropic sealing composition is delivered, under pressure to the tail seal.

Atmospheric conditions within a tunnel and, especially those in which compressed air is fed present a potentially serious fire hazard. It is an object of the present invention to provide a sealing composition which is suitable for use in such conditions.

According to the present invention a sealing composition comprises, by mass (3-7)% Laponite, (5-10)% mica and/or gel in the form of flakes or micelle and balance water. Preferably, the composition comprises 5% of "pumping grade" Laponite and 5% mica. Conveniently, the flakes of mica and/or gel have a maximum dimension of up to 12 mm and, in the case of mica 1 to 5 mm (preferably 3 mm) and, in the case of gel 3 to 12 mm (preferably 10 mm). Preferably, the gel is cellophane.

If desired, the composition may also contain up to 5 by mass of cotton fibre. It is believed that the mica and/or gel in flake form together with the cotton fibre fulfill the function of void blocking additives present in the sealing composition as a dispension. It is also believed that the cotton fibres serve to retain the mica flake and/or the gel flake solids in the Laponite.

Although "pumping grade" Laponite is preferred, "travelling grade" Laponite may be used to at least partially replace the pumping grade constituent. Where "travelling grade" Laponite is used as a substitute for "pumping grade" Laponite, a suitable composition comprises by mass 5% "travelling grade" Laponite 10% mica and/or gel in flake form as defined above and balance water.

The Laponite may be replaced by Wyoming Bentonite which is a naturally occurring clay mineral frequently referred to as Smectite. Such material is also sometimes referred to as montmorillonite. If desired sodium may be added to smectite by treatment with salt and/or sodium carbonate.

Where such naturally occurring clay minerals are used to replace Laponite, the quantity used in the sealing composition is, preferably,in intense proportion to the liquid limit. It will, therefore, be appreciated that approximately three to four times the concentration of natural minerals would be required in the composition to achieve a similar consistency when compared with a sealing composition containing pumping or travelling grade Laponite.

The liquid limits of Laponite and its alternatives are as follows:

Laponite 1000% water of dry weight;

Premium grade Wyoming Bentonite 272% water of dry weight, and

Modified UK Bentonite 199% water of dry weight.

Sealing composition in accordance with the present invention may also include a corrosion inhibitor in order to reduce the possibility of corrosion of ferrous metallic components of the tail seals or other equipment with which the sealing composition makes contact.

The invention also includes sealing compositions having a lithium grease base, a polyisobutene grease base, a non-toxic, biodegradable rape seed oil base as well as a water based modified bentonite/cellulose polymer paste base. Such compositions possess a shear strength in the range of 500-2500 pascals depending upon composition, temperature and degree of working.

The lithium sealing composition grease is resistant to mixing with ground water, grout and bentonite slurry, it does not attack neoprene segment seals but it attacks Ethylene Propaline Diane Monomer (E.P.D.M.) rubber segment seals. It also tends to inhibit the hydration of hydrotite when it prevents the water getting to it.

The polyisobutene sealing composition grease is resistant to mixing with ground water, grout and bentonite slurry, it does not attack neoprene segment seals nor does it attack E.P.D.M. rubber segment seals but it tends to inhibit the hydration of hydrotite when it prevents the water getting to it.

The rape seed oil grease is completely non toxic, it is resistant to mixing with ground water, grout and bentonite slurry, it does not attack neoprene segment seals nor does it attack E.P.D.M. rubber segment seals but it tends to inhibit the hydration of hydrotite in the short term (before biodegradation) when it tends to prevent the water getting to it. This base grease is of course more expensive than any of the other base greases.

The water based modified bentonite/cellulose polymer paste base is less resistant to mixing with ground water, grout and bentonite slurry than lithium or polyisobutene grease, however it does not attack neoprene segment seals, it does not attack E.P.D.M. rubber segment seals nor does it inhibit the hydration of hydrotite by preventing water getting to it.

The lithium, polyisobutene, rape seed oil and modified bentonite based sealing composition preferably also contain mica and/ or gel in the form of flake described above. In addition, and also as described above, cotton fibre and a corrosion inhibitor may also be included in such compositions.

## Claims

1. A sealing composition comprising by mass (3-7)% Laponite, (5-10)% mica and/or gel in the form of flakes or micelle and balance water

2. A combination according to Claim 1 comprising 5% Laponite and 5% mica.

3. A composition according to Claim 1 or Claim 2 wherein the flakes of mica and/or gel have a maximum dimension of up to 12 mm.

4. A composition according to Claim 3 wherein the flakes of mica have a maximum dimension falling within the range of 1 to 5 mm.

5. A composition according to Claim 3 wherein the gel contains cellophane flakes having a maximum dimension falling within the range 3 to 12 mm.

EP 0 508 719 A1

**European Patent Office**

# EUROPEAN SEARCH REPORT

Application Number

EP 92 30 3063

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 119 012 (HERCULES CORPORATION) * abstract; claims 1,5,9,11 * | 1,3-5 | C09K3/10 E21D11/38 |
| Y | WORLD PATENTS INDEX LATEST Derwent Publications Ltd., London, GB; AN 90-242261 & JP-A-2 167 997 (NIPPON KOKUDO KAIHA) 28 June 1990 * abstract * | 1,3-5 | |
| A | GB-A-2 235 442 (SANDVIK AB) * abstract; claims 1,9,17 * | 1,3-5 | |
| A | DE-A-3 912 765 (MUELLER) * abstract; claim 1 * | 1,3-5 | |
| A | WORLD PATENTS INDEX LATEST Derwent Publications Ltd., London, GB; AN 91-113517 & JP-A-3 054 286 (IBIDEN) 8 March 1991 * abstract * | 1,3-5 | **TECHNICAL FIELDS SEARCHED (Int. Cl.5)** C09K E21D |

The present search report has been drawn up for all claims

| Place of search | Date of completion of the search | Examiner |
|---|---|---|
| THE HAGUE | 14 JULY 1992 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

4